# EUROPÄISCHE PATENTSCHRIFT

(11) **EP 0 318 878 B1**
(45) Veröffentlichungstag und Bekanntmachung des Hinweises auf die Patenterteilung: **28.04.1993**
(21) Anmeldenummer: 88119759.4
(22) Anmeldetag: 26.11.1988
(51) Int. Cl.: C09J 109/00, C09J 129/02, C09J 155/04, C08G 18/69, C08G 18/80

(54) **Heisshärtende Klebstoffe auf Basis von Hydroxylgruppen enthaltendem Polybutadien**
Thermally curing adhesives based on polybutadiene containing hydroxyl groups
Adhésif thermodurcissable à partir de polybutadiène contenant des groupes d'hydroxyle

(30) Priorität: 04.12.1987 DE 3741165
(43) Veröffentlichungstag der Anmeldung: 07.06.1989
(73) Patentinhaber: Henkel Kommanditgesellschaft auf Aktien, 40191 Düsseldorf (DE)
(72) Erfinder: Hemel, Richard, D-4019 Monheim-Baumberg (DE); Herold, Julius, Dr., 28088 Gettysburg, MI 48018 (US); Bücken, Hans-Jürgen, D-4019 Monheim 1 (DE); Hofmann, Peter, D-4000 Düsseldorf 13 (DE)

(56) Entgegenhaltungen:
- EP-A- 0 009 613
- GB-A- 1 046 166

## Beschreibung

Die Erfindung betrifft heißhärtende Klebstoffe auf Basis von Hydroxylgruppen enthaltendem Polybutadien.

Zur Verklebung von Metalloberflächen, insbesondere Stahlblechen im Automobilbau, werden heißhärtende, kalt- oder warmverpumpbare Klebstoffe auf Basis flüssiger Polybutadiene eingesetzt; diese Polybutadiene können reaktive Gruppen, z.B. Hydroxyl- oder Carboxylgruppen enthalten. Die Vernetzung bei diesen Systemen erfolgt normalerweise durch Vulkanisation, d.h. Schwefel-Brückenbildung zwischen den einzelnen Polymerketten. Die Elastizität der vulkanisierten Systeme ist für viele Anwendungszwecke allerdings nicht ausreichend. Durch Zusatz fester Kautschuk-Elastomeren lassen sich zwar Elastizitätsverbesserungen erzielen, jedoch nur bei gleichzeitiger Erhöhung der Viskosität, so daß die Effekte für verarbeitbare Viskositäten gering sind.

Es sind weiterhin heißhärtende Systeme auf der Basis von Hydroxylgruppen enthaltendem Polybutadien, Diisocyanaten, Schwefel und gegebenenfalls üblichen Vulkanisationsbeschleunigern bekannt, bei denen die Härtung unter anderem durch Reaktion der Diisocyanate mit den Hydroxylgruppen erfolgt. So beschreibt die SU-OS 99 25 46 (C.A. 98 (20): 16 22 61 m) ein flüssiges Härtungsmittel für ein NCO-terminiertes Polyurethanprepolymer, welches aus einem Oligodiendiol, einem Katalysator, Schwefel und Vulkanisationsbeschleunigern besteht und dessen Standzeit mit dem ein OH-terminiertes 1,3-Butadien/Piperylen-Copolymer enthaltendem Härtemittel verbessert werden kann. Die JA-OS 80/125171 (C.A. 97 (16): 128615 z) betrifft eine Beschichtungsmasse, die unter anderem aus OH-terminiertem Polybutadien, Diisocyanat-Prepolymeren, schwefelhaltigen Estern und Vernetzungsmitteln besteht. Die JA-OS 77/14638 (C.A. 86 (20): 141828p) betrifft eine heißhärtende Beschichtungsmasse aus OH-terminiertem Polybutadien, PAPI, Schwefel und Vulkanisationsbeschleunigern. Die JA-OS 76/6897 (C.A. 85 (12): 78704 g) betrifft die Herstellung von schlagzähem Polyamid durch Polymerisation in Gegenwart von Schwefel, OH-terminiertem Butadien und Polyisocyanaten bzw. Isocyanat-terminierten Polyurethanen. Schließlich betrifft die JA-OS 74/6840 (C.A. 82 (4): 18331 m) Alkylenoxid-Polyisocyanat-Copolymere, die mit Schwefel in Gegenwart von Polybutadien-Diol und Vulkanisationsbeschleunigern gehärtet werden.

Die Erfindung ist auf heißhärtende Klebstoffe der eingangs genannten Art gerichtet, die nach der Härtung ein verbessertes Elastizitätsverhalten zeigen, wobei die Produkte vor der Härtung vergleichsweise niedrige Viskositäten aufweisen.

Diese Aufgabe wird erfindungsgemäß durch heißhärtende Klebstoffe gelöst, die durch einen Gehalt an
a) Polybutadien mit einem Zahlenmittel der Molmassen von etwa 1000 bis 3500 und OH-Zahlen im Bereich von etwa 20 bis 100,
b) verkappten Diisocyanaten,
c) Schwefel und
d) üblichen Vulkanisationsbeschleunigern sowie
e) gegebenenfalls üblichen, insbesondere mineralischen Füllstoffen, Pigmenten und/oder Hilfsstoffen
gekennzeichnet sind,
wobei Polybutadien und verkapptes Diisocyanat in Mengen entsprechend einem OH/NCO-Verhältnis von 1 : 1,1 bis 1 : 0,1 enthalten sind,
Polybutadiene mit den vorgenannten Eigenschaften sind handelsübliche Produkte.

Unter verkappten Diisocyanaten sind Verbindungen zu verstehen, die infolge "maskierter" Isocyanatgruppen erst bei erhöhter Temperatur wie Diisocyanate reagieren. Derartige Produkte werden auch als Isocyanat-Abspalter bzw. "moderators" bezeichnet. Typische Vertreter von Maskierungsgruppen sind in Houben-Weyl, Band XIV/2, Seiten 61 bis 70, beschrieben. Im Rahmen der Erfindung geeignete Verkappungsgruppen sind insbesondere primäre Alkohole, Phenole, epsilon-Caprolactam, Acetessigester, Malonester, Acetylaceton, Phthalimid, Imidazol, Chlorwasserstoff und Cyanwasserstoff.

Als bevorzugte Vertreter für erfindungsgemäß einzusetzende Diisocyanate sind zu nennen:
1,4-Diisocyanatobenzol, Toluoldiisocyanat, 4,4'-Methylenbis(phenylisocyanat), 1,5-Naphthalin-diisocyanat, Bitolylendiisocyanat, 1,3-Xylylen-diisocyanat, p-1,1,4,4-Tetramethylxylylen-diisocyanat, m-1,1,3,3-Tetramethylxylylen-diisocyanat, Hexamethylendiisocyanat, 1,6-Diisocyanato-2,2,4,4-tetramethylhexan, 1,6-Diisocyanato-2,4,4-trimethylhexan, 1,4-Cyclohexan-diisocyanat, 1,4-Cyclohexan-bis(methylenisocyanat), 1,3-Bis(isocyanatomethyl)cyclohexan, 3-Isocyanatomethyl-3,5,5-trimethylcyclohexylisocyanat, Dicyclohexylmethan-diisocyanat.

Die im Rahmen der Erfindung einsetzbaren Vulkanisationsbeschleuniger sind die aus der Vulkanisationstechnik dem Fachmann geläufigen. Typische Vertreter sind 2-Mercapto-benzothiazol, Dibenzo-thiazyldisulfid, 2-Mercaptobenzothiazol-Zink, Tetramethyl-thiuram-disulfid, auch in Mischung mit 2-Mercaptobenzothiazol, Benzothiazyl-2-cyclohexyl-sulfenamid, Benzothiazyl-2-tert.-butyl-sulfenamid, Benzothiazyl-2-sulfen-morpholid, Diphenylguanidin, Di-o-tolylguanidin, o-Tolyl-biguanid und dergleichen.

Als übliche, insbesondere mineralische Füllstoffe eignen sich beispielsweise Calciumcarbonat, Magnesium-Aluminium-Silikat, Aluminium-Silikat-Hydrat, Wollastonit, Kieselsäure und dergleichen. Typische Pigmente, z.B. Ruß, und/oder Hilfsstoffe sind die aus der Vulkanisationstechnik bekannten. Weiterhin können auch zusätzlich zu dem Hydroxylgruppen enthaltenden Polybutadien auch unsubstituierte, d.h. hydroxylgruppenfreie, insbesondere flüssige Polybutadientypen zugesetzt werden.

Die vorgenannten heißhärtenden Klebstoffe weisen den zusätzlichen, unerwarteten Vorteil auf, daß sie, gemessen an der Zugscherfestigkeit, ein um ca. 30 % höheres Festigkeitsniveau als herkömmliche heißhärtende Klebstoffe auf Basis von OH-terminiertem Polybutadien aufweisen.

Gemäß einer vorteilhaften Ausführungsform der Erfindung verwendet man OH-Gruppen-terminiertes Polybutadien. Vorzugsweise setzt man Polybutadien und verkapptes Diisocyanat in Mengen entsprechend einem OH/NCO-Verhältnis von 1 : 0,9 bis 1 : 0,1 den heißhärtenden Klebstoffen zu.

Gemäß einer weiteren vorteilhaften Ausführungsform der Erfindung ist das verkappte Diisocyanat ein mit epsilon-Caprolactam verkapptes Isophoron-diisocyanat.

Besonders bevorzugt sind heißhärtende Schmelzkleber, die auf 100 Gew.-Teile Hydroxylgruppen enthaltendes Polybutadien 5 bis 30 Gew.-Teile Schwefel und Härtungsbeschleuniger sowie 100 bis 400 Gew.-Teile Füllstoffe, Pigmente und/oder Hilfsstoffe enthalten. Dabei ist es bevorzugt, Schwefel und Vulkanisationsbeschleuniger in Gew.-Verhältnissen von 1 : 0,8 bis 1 : 1,2 zueinander einzusetzen.

Die Erfindung wird im folgenden anhand bevorzugter Ausführungsbeispiele näher erläutert.

### Allgemeine Herstellungsvorschrift:

### 1. Voransatz

Polybudadien wird vorgelegt und auf ca. 130°C aufgeheizt. Das verkappte Diisocyanat wird unter Rühren portionsweise zugegeben und gelöst. Nach Beendigung des Lösungsvorganges läßt man das Reaktionsgemisch auf Umgebungstemperatur abkühlen.

### 2. Hauptansatz

Zweckmäßigerweise erfolgt die Herstelllung in einem Z-Kneter.

Vorbestimmte Mengen des Voransatzes werden in dem Kneter vorgelegt und mit den übrigen Additiven einschließlich eines Teils des vorgesehenen Füllstoffs versetzt. Das Reaktionsgemisch wird bis zur Homogenität miteinander verknetet. Anschließend wird der Rest des vorgesehenen Füllstoffes eingeknetet. Zum Abschluß wird das Gemisch noch weitere 5 Minuten geknetet.

Alternativ ist es auch möglich, die am Schluß zuzugebende Restmenge an Füllstoff zusammen mit weiterem Polybutadien einzuarbeiten.

### Beispiele 1, 2

Gemäß er obigen allgemeinen Herstellungsvorschrift wurden aus den Komponenten gemäß Tabelle 1 heißhärtende Klebstoffe hergestellt, die in der Wärme (60°C) pumpbar waren.

Das eingesetzte OH-terminierte Polybutadien war ein handelsübliches Produkt mit einem Molekulargewicht von 1350 +/- 150, einer OH-Zahl von ca. 80, einer Viskosität von 30 bis 90 poise/45°C mit 90 % 1,2-Vinylgruppen und endständigen OH-Gruppen. Das OH/NCO-Verhältnis betrug 1 : 0,2 (Beispiel 1) bzw. 1 : 0,8 (Beispiel 2).

### Vergleichsbeispiel

Es wurde ein heißhärtender Klebstoff in einer Zusammensetzung gemäß Beispiel 1 hergestellt, mit der Maßgabe, daß kein verkapptes Diisocyanat zugesetzt wurde; statt dessen wurde der Calciumcarbonatgehalt erhöht, um die Zusammensetzung auf 100 % zu bringen.

Die Tabelle 1 enthält die Zusammensetzung des Vergleichsbeispiels 1 sowie die anwendungstechnischen Ergebnisse der Klebstoffe gemäß den vorstehend genannten Beispielen.

**Tabelle 1**

| | Bsp. 1 | Bsp. 2 | Vergleichsbsp. |
|---|---|---|---|
| 1,2 Polybutadien (OH) | 28,0 | 28,0 | 28,0 |
| Isophorondiisocyanat (verkappt mit epsilon-Caprolactam) | 2,0 | 9,0 | - |
| Zinkoxid | 4,0 | 4,0 | 4,0 |
| Calciumoxid | 5,0 | 5,0 | 5,0 |
| Calciumcarbonat | 30,5 | 23,5 | 32,5 |
| Magnesium-Silikat | 25,0 | 25,0 | 25,0 |
| Ruß | 0,5 | 0,5 | 0,5 |
| Schwefel | 2,0 | 2,0 | 2,0 |
| Dibenzothiazyldisulfid | 2,5 | 2,5 | 2,5 |
| Alterungsschutzmittel | 0,5 | 0,5 | 0,5 |
| (handelsübliches Pheny- | | | |
| lendiaminderivat) | | | |
| | 1̅0̅0̅,̅0̅ | 1̅0̅0̅,̅0̅ | 1̅0̅0̅,̅0̅ |

| Ergebnisse nach Härtung 30 in 180°C | | | |
|---|---|---|---|
| Zugscherfestigkeit (N/cm²) | | | |
| 3 mm Schichtstärke | 351 | 450 | 200 |
| Bruchdehnung (%) | 31 | 22 | 13 |
| Bruchfestigkeit (N/mm²) | 2,7 | 6,1 | 3,8 |

| Schälfestigkeit (N/cm) Schichtstärke 3 mm | | | |
|---|---|---|---|
| Anriß | 224 | 401 | 269 |
| Weiterriß | 79 | 84 | 52 |

Aus der Tabelle 1 ergibt sich, daß die heißhärtenden Klebstoffe der Erfindung überlegene Eingenschaften hinsichtlich Zugscherfestigkeit und Bruchdehnung gegenüber dem Vergleichsbeispiel aufweisen.

### Beispiel 3

Es wurde ein heißhärtender Klebstoff in der oben beschriebenen Weise aus den folgenden Komponenten hergestellt, wobei ein handelsübliches OH-substituiertes Polybutadien mit einem durchschnittlichen Molekulargewicht von 2800, einer OH-Zahl von ca. 40 und einer Viskosität (Pas, 25°C) von max. 7 eingesetzt wurde.

| | |
|---|---|
| 1,2 Polybutadien (OH) | 19,0 |
| flüssiges 1,2-Polybutadien (ohne OH-Substitution) | 16,5 |
| Isophorondiisocyanat (verkappt mit Caprolactam) | 4,0 |
| Zinkoxid | 4,0 |
| Calciumoxid | 5,0 |
| Ruß | 0,5 |
| Schwefel | 6,8 |
| Dibenzothiazyldisulfid | 8,2 |
| Phenolharz | 4,0 |
| Alterungsschutzmittel (wie in Tabelle 1) | 0,5 |
| Magnesium-Silikat | 31,5 |
| | 1̅0̅0̅,̅0̅ |

| Ergebnis: nach Härtung 30 in 180°C | |
|---|---|
| Zugscherfestigkeit (N/cm²) 3 mm Schicht | 491 |
| Bruchdehnung (%) | 28 |
| Bruchfestigkeit (N/mm²) | 3,7 |
| OH : NCO-Verhältnis: 1 : 1,06. | |

### Beispiel 4

Es wurde ein heißhärtender Klebstoff in der oben beschriebenen Weise aus den folgenden Komponenten hergestellt, wobei ein handelsübliches Polybutadien mit einem durchschnittlichen Molekulargewicht von 2800, einer OH-Zahl von 46,6 und einer Viskosität (Pas, 30°C) von 5,0 eingesetzt wurde.

| | |
|---|---|
| 1,2 Polybutadien (OH) | 20,0 |
| Flüssiges 1,2-Polybutadien (ohne OH-Substitution) | 17,5 |
| Isophorondiisocyanat (verkappt mit Caprolactam) | 5,0 |
| Zinkoxid | 4,0 |
| Calciumoxid | 5,0 |
| Ruß | 0,5 |
| Schwefel | 6,0 |
| Dibenzothiazyldisulfid | 4,0 |
| Tetramethylthiuramdisulfid | 1,0 |
| Phenolharz | 3,0 |
| Alterungsschutzmittel (wie in Tabelle 1) | 0,5 |
| N-(Cyclohexyl)phthalimid | 0,5 |
| Magnesium-Silikat | 33,0 |
| | 1̅0̅0̅,̅0̅ |

| Ergebnis: nach Härtung 30 in 180°C | |
|---|---|
| Zugscherfestigkeit (N/cm²) 3 mm Schicht | 98 |
| OH : NCO-Verhältnis : 1 : 1,08 | |

## Patentansprüche

1. Heißhärtende Klebstoffe auf Basis von Hydroxylgruppen enthaltendem Polybutadien, gekennzeichnet durch einen Gehalt an
a) Polybutadien mit einem Zahlenmittel der Molmasse von 1000 bis 3500 und OH-Zahlen im Bereich von 20 bis 100,
b) verkappten Diisocyanaten,
c) Schwefel und
d) üblichen Vulkanisationsbeschleunigern sowie
e) gegebenenfalls üblichen, insbesondere mineralischen Füllstoffen, Pigmenten und/oder Hilfsstoffen,
wobei Polybutadien und verkapptes Diisocyanat in Mengen entsprechend einem OH/NCO-Verhältnis von 1 : 1,1 bis 1 : 0,1 enthalten sind.

2. Heißhärtende Klebstoffe nach Anspruch 1, dadurch gekennzeichnet, daß das Hydroxylgruppen enthaltende Polybutadien ein Hydroxylgruppen-terminiertes Polybutadien ist.

3. Heißhärtende Klebstoffe nach Anspruch 1 oder 2, dadurch gekennzeichnet, daß Polybutadien und verkapptes Diisocyanat in Mengen entsprechend einem OH/NCO-Verhältnis von 1 : 0,9 bis 1 : 0,1 enthalten sind.

4. Heißhärtende Klebstoffe nach einem der Ansprüche 1 bis 3, dadurch gekennzeichnet, daß die Diisocyanate aus der von 1,4-Diisocyanatobenzol, Toluoldiisocyanat, 4,4′-Methylenbis(phenylisocyanat), 1,5-Naphthalin-diisocyanat, Bitolylendiisocyanat, 1,3-Xylylen-diisocyanat, p-1,1,4,4-Tetramethylxylylen-diisocyanat, m-1,1,3,3-Tetramethylxylylen-diisocyanat, Hexamethylendiisocyanat, 1,6-Diisocyanato-2,2,4,4-tetramethylhexan, 1,6-Diisocyanato-2,4,4-trimethylhexan, 1,4-Cyclohexan-diisocyanat, 1,4-Cyclohexan-bis(methylenisocyanat), 1,3-Bis(isocyanatomethyl)cyclohexan, 3-Isocyanatomethyl-3,5,5-trimethylcyclohexylisocyanat, Dicyclohexylmethan-diisocyanat gebildeten Gruppe ausgewählt sind.

5. Heißhärtende Klebstoffe nach einem der Ansprüche 1 bis 4, dadurch gekennzeichnet, daß die Verkappungsgruppen aus der von primären Alkoholen, Phenolen, epsilon-Caprolactam, Acetessigester, Malonester, Acetylaceton, Phthalimid, Imidazol, Chlorwasserstoffen und Cyanwasserstoffen gebildeten Gruppe ausgewählt sind.

6. Heißhärtende Klebstoffe nach einem der Ansprüche 1 bis 5, dadurch gekennzeichnet, daß des verkappte Diisocyanat mit Caprolactam verkapptes Isophorondiisocyanat ist.

7. Heißhärtende Klebstoffe nach einem der Ansprüche 1 bis 6, dadurch gekennzeichnet, daß sie auf 100 Gew.-Teile Hydroxylgruppen enthaltendes Polybutadien 5 bis 30 Gew.-Teile Schwefel und Härtungsbeschleuniger sowie 100 bis 400 Gew.-Teile Füllstoffe, Pigments und/oder Hilfsstoffe enthalten.

8. Heißhärtende Klebstoffe nach einem der Ansprüche 1 bis 7, dadurch gekennzeichnet, daß sie Schwefel und Vulkanisationsbeschleuniger in Gew.-Verhältnissen von 1 : 0,8 bis 1 : 1,2 enthalten.

## Claims

1. Hot-curing adhesives based on polybutadiene containing hydroxyl groups, characterized by a content of
a) polybutadiene having a number average molecular weight of 1000 to 3500 and OH values in the range from 20 to 100,
b) masked diisocyanates,
c) sulfur and
d) standard vulcanization accelerators and
e) optionally, standard, more especially mineral, fillers, pigments and/or auxiliaries,
polybutadiene and masked diisocyanate being present in quantities corresponding to an OH:NCO ratio of 1:1.1 to 1:1.01.

2. Hot-curing adhesives as claimed in claim 1, characterized in that the polybutadiene containing hydroxyl groups is a hydroxyl-terminated polybutadiene.

3. Hot-curing adhesives as claimed in claim 1 or 2, characterized in that the polybutadiene and masked diisocyanate are present in quantities corresponding to an OH/NCO ratio of 1 : 0.9 to 1 : 0.1.

4. Hot-curing adhesives as claimed in any of claims 1 to 3, characterized in that the diisocyanates are selected from the group consisting of 1,4-diisocyanatobenzene, toluene diisocyanate, 4,4'-methylene-bis-(phenylisocyanate), 1,5-naphthalene diisocyanate, bitolylene diisocyanate, 1,3-xylylene diisocyanate, p-1,1,4,4-tetramethylxylylene diisocyanate, m-1,1,3,3-tetramethylxylylene diisocyanate, hexamethylene diisocyanate, 1,6-diisocyanato-2,4,4-tetramethylhexane, 1,6-diisocyanato-2,4,4-trimethyl hexane, 1,4-cyclohexane diisocyanate, 1,4-cyclohexane-bis-(methylene isocyanate), 1,3-bis-(isocyanatomethyl)-cyclo-hexane, 3-isocyanatomethyl-3,5,5-trimethylcyclohexyl isocyanate, dicyclohexyl methane diisocyanate.

5. Hot-curing adhesives as claimed in any of claims 1 to 4, characterized in that the masking groups are selected from the group consisting of primary alcohols, phenols, epsilon-caprolactam, acetoacetic ester, malonic ester, acetyl acetone, phthalimide, imidazole, hydrogen chlorides and hydrogen cyanides.

6. Hot-curing adhesives as claimed in any of claims 1 to 5, characterized in that the masked diisocyanate is a caprolactam-masked isophorone diisocyanate.

7. Hot-curing adhesives as claimed in any of claims 1 to 6, characterized in that they contain from 5 to 30 parts by weight sulfur and curing accelerator and 100 to 400 parts by weight fillers, pigments and/or auxiliaries to 100 parts by weight hydroxyl-containing polybutadiene.

8. Hot-curing adhesives as claimed in any of claims 1 to 7, characterized in that they contain sulfur and vulcanization accelerator in ratios by weight of from 1 : 0.8 to 1 : 1.2.

## Revendications

1. Adhésifs thermodurcissables à partir de polybutadiène contenant des groupes hydroxyle, caractérisés par une teneur en :
a) polybutadiène avec une valeur moyenne de la masse moléculaire de 1000 à 3500 et des indices OH dans la plage de 20 à 100,
b) diisoxyanates masqués,
c) soufre et
d) accélérateurs de vulcanisation usuels ainsi que
e) éventuellement des charges usuelles, en particulier minérales, des pigments et/ou matières auxiliaires,
dans lesquels polybutadiène et diisocyanate masqué sont contenus en quantités correspondant à un rapport OH/NCO de 1 : 1,1 à 1 : 0,1.

2. Adhésifs thermodurcissables selon la revendication 1, caractérisé en ce que le polybutadiène contenant des groupes hydroxyle est un polybutadiène terminé par des groupes hydroxyle.

3. Adhésifs thermodurcissables selon la revendication 1 ou 2, caractérisé en ce que polybutadiène et diisocyanate masqué sont contenus en quantités correspondant à un rapport OH/NCO de 1 : 0,9 à 1 : 0,1.

4. Adhésifs thermodurcissables selon une des revendications 1 à 3, caractérisés en ce que les diisocyanates sont choisis dans le groupe formé de 1,4-diisocyanatobenzène, toluènediisocyanate, 4,4'-méthylènebis-(phénylisocyanate), 1,5-naphtalène -diisocyanate, bitolylènediisocyanate, 1,3-xylylènediisocyanate, p-1,1,4,4-tétraméthylxylylène-diisocyanate, m-1,1,3,3-tétraméthylxylylène-diisocyanate, hexaméthylènediisocyanate, 1,6-diisocyanato-2,2,4,4-tétraméthylehéxane, 1,6-diisocyanato-2,4,4-triméthylehéxane, 1,4-cyclohéxane-diisocyanate, 1,4-cyclohéxanebis(méthylènisocyanate), 1,3-bis(isocyanatométhyle)-cyclohéxane, 3-isocyanatométhyle-3,5,5-triméthylecy-clohéxylisocyanate, dicyclohéxyleméthane-diisocyanate.

5. Adhésifs thermodurcissables selon une des revendications 1 à 4, caractérisés en ce que les groupes de masquage sont choisis dans le groupe formé d'alcools primaires, phénols, epsilon-caprolactame, ester acétylacétique, diestermalonique, acétylacétone, phtalimide, imidazole, acide chlorhydrique et acide cyanhydrique.

6. Adhésifs thermodurcissables selon une des revendications 1 à 5, caractérisés en ce que le diisocyanate masqué est de l'isophorone diisocyanate masqué par du caprolactame.

7. Adhésifs thermodurcissables selon une des revendications 1 à 6, caractérisés en ce que pour 100 parties en poids de polybutadiène contenant des groupes hydroxyle ils contiennent 5 à 30 parties en poids de soufre et d'accélérateurs de durcissement ainsi que 100 à 400 parties en poids de charges, de pigments et/ou de substances auxiliaires.

8. Adhésifs thermodurcissables selon une des revendications 1 à 7, caractérisés en ce qu'ils contiennent du soufre et des accélérateurs de vulcanisation dans des rapports de poids de 1 : 0,8 à 1 : 1,2.
